# EUROPÄISCHE PATENTSCHRIFT

(11) **EP 2 795 601 B1**
(45) Veröffentlichungstag und Bekanntmachung des Hinweises auf die Patenterteilung: **01.05.2019**
(21) Anmeldenummer: 13712180.2
(22) Anmeldetag: 14.03.2013
(51) Int. Cl.: G08B 29/08, G06F 21/70, G08B 29/24

(54) **VERFAHREN UND VORRICHTUNG ZUM ERKENNEN EINER MANIPULATION AN EINER ELEKTRISCHEN LEITUNG**
METHOD AND DEVICE FOR RECOGNIZING A MANIPULATION ON AN ELECTRICAL LINE
PROCÉDÉ ET DISPOSITIF DE DÉTECTION D'UNE MANIPULATION D'UNE LIGNE ÉLECTRIQUE

(30) Priorität: 25.04.2012 DE 102012206870
(43) Veröffentlichungstag der Anmeldung: 29.10.2014
(73) Patentinhaber: Siemens Aktiengesellschaft, 80333 München (DE)
(72) Erfinder: DICHTL, Markus, 80636 München (DE); MEYER, Bernd, 81739 München (DE)
(86) Internationale Anmeldenummer: PCT/EP2013/055257
(87) Internationale Veröffentlichungsnummer: WO 2013/160009

(56) Entgegenhaltungen:
- WO-A1-2008/095160
- WO-A1-2013/117905
- BE-A6- 1 013 259
- FR-A1- 2 413 729

## Beschreibung

Die vorliegende Erfindung betrifft ein Verfahren und eine Vorrichtung zum Erkennen einer Manipulation an einer elektrischen Leitung. Die elektrische Leitung ist eine Kommunikationsleitung, wie zum Beispiel ein Kommunikations-Bus, eine Daten- oder Adressleitung, eine Leitung die wahlweise zur Versorgung und zur Kommunikation verwendet wird, eine Leitung einer Platine (Printed Circuit Board) zwischen elektronischen Komponenten (wie beispielsweise integrierten Schaltkreisen) oder eine nur einseitig angeschlossene Leitung (Floating Gate).

Es sind vielfältige Methoden zur Erkennung von Manipulationsversuchen an elektrischen Leitungen und an elektronischen Schaltungen bekannt. Die verschiedenen Verfahren lassen sich in Verfahren mit und ohne Sensorik und in aktive und passive Verfahren unterteilen.

In der einfachsten Form werden Siegel, Plomben oder speziell gefertigte Gehäuse verwendet, zum Beispiel bei Stromzählern. Diese Verfahren ermöglichen es, durch einen Prüfvorgang - mögliche Prüfverfahren reichen von einer einfachen optischen Inspektion bis zu aufwändigen Laboruntersuchungen - die Unversehrtheit zu verifizieren. Üblicherweise ist dabei das zu schützende Gerät nicht in der Lage, die notwendige Prüfung automatisch durchzuführen. Damit diese Verfahren Schutz bieten können, muss der Hersteller einen technologischen Vorsprung bei der Generierung des Schutzmechanismus gegenüber einem potentiellen Angreifer oder Fälscher besitzen.

Viele elektronische Systeme überwachen ihre Betriebsparameter, um ihre korrekte Arbeitsweise sicherstellen zu können. Beispiele hierfür sind die Überwachung von Temperatur, Betriebsspannung, Frequenz. Ferner können fehlererkennende und fehlerkorrigierende Codes zum Schutz von gespeicherten Daten, redundant ausgelegte Systemkomponenten, Watch-Dogs und dergleichen eingesetzt werden. Diese Techniken schützen im Allgemeinen jedoch nur gegen zufällig auftretende Fehler und sind daher typischerweise für Safety-kritische Anwendungen von Bedeutung.

Mittels kryptographischer Verfahren können auch absichtliche Änderungen an Daten und Programmen erkannt werden. Damit ein elektronisches System die Überprüfung und eine entsprechende Reaktion auf erkannte Manipulationen sicher durchführen kann, ist auch eine geschützte Programmausführung - zumindest der Prüfroutinen - notwendig. Anderenfalls kann der Angreifer die Durchführung eines Prüfverfahrens oder die Auswertung des Prüfergebnisses durch Manipulation der Hardware wieder verhindern. Für derartige Hardware-Manipulationen werden auch spezielle Chips entwickelt und vertrieben, so genannte Mod-Chips. Für den Angriff werden dann einzelne Leitungen eines Boards aufgetrennt und der Mod-Chip wird in die Signalpfade eingeschleust. Der Mod-Chip stört danach nicht die normale Arbeitsweise des Geräts. Er greift nur an ganz speziellen Punkten der Programmausführung ein und verändert gezielt Werte auf dem Datenbus, um beispielsweise eine Sicherheitsüberprüfung zu manipulieren.

Um eine geschützte Programmausführung zu ermöglichen, werden in praktischen Anwendungen häufig spezielle Sicherheitscontroller, so genannte Hardware-Security-Token, wie Chipkarten oder Microcontroller mit integriertem RAM-Speicher und nichtflüchtigem Speicher eingesetzt. Auf diesen Token wird dann das geheime Schlüsselmaterial permanent gespeichert und zumindest sicherheitsrelevante Teile der Applikation, wie beispielsweise kryptographische Routinen, werden auf diesen Controllern ausgeführt. Dieser Ansatz verwendet keine Sensorik mit aktiven Komponenten. Daher ist man ausschließlich auf die speziellen, in Hardware implementierten Schutzmaßnahmen der Controller angewiesen.

Seltener wird ein ganzes Computersystem mittels aktiver Sensorik geschützt, um eine sichere Programmausführung zu ermöglichen. Die Bandbreite reicht von einfachen Gehäuseschaltern, um ein unerlaubtes Öffnen erkennen zu können, bis zu speziellen Verpackungs- und Vergussformen wie Bohrschutzfolie und speziell gefertigten Platinen. Die Elektronik überwacht ständig die elektrischen Eigenschaften des verpackten Computersystems und löst bei Manipulationen einen Alarm aus, wodurch Schlüsselmaterial und/oder das Programm gelöscht wird.

Solche Schutzmaßnahmen verursachen hohe Herstellungskosten und benötigen eine Batterie zur unterbrechungsfreien Stromversorgung der Schutzelektronik. Dadurch entstehen weitere Kosten und Probleme bezüglich Betriebsdauer, Betriebsparameter und Verfahren zum Batterietausch. Die zur Überwachung verwendete Sensorik kann auf vielfältige Weise realisiert werden. Beispiele hierfür sind ohmsche Messbrücken, Licht- und Drucksensoren, kapazitive und induktive Sensoren.

Die WO 2008/095160 A1 offenbart ein Elektrozaungerät für einen Elektrozaun, welcher einen Draht für eine Hin- und Rückführung hat. Das Elektrozaungerät weist einen Hochspannungsimpulsgenerator zum Erzeugen von Hochspannungsimpulsen an der Hinführung und eine Niederspannungsschaltung zum Bereitstellen einer Niederspannung an der Hinführung und zum Überwachen von möglichen Änderungen in dem Niederspannungssignal an der Rückführung auf, um festzustellen, ob der Draht des Zauns berührt wird, oder ob ein Kurzschluss oder eine Unterbrechung vorliegt.

Die BE 1 013 259 A6 offenbart ein Barrierensystem zum Verhindern eines Eindringens auf ein Grundstück, wobei das Barrierensystem einen Elektroimpulsgenerator, zumindest einen Abschnitt eines Elektrozaundrahts, welcher um zumindest einen Teil des Grundstücks angeordnet ist und mit den Ausgängen des Generators verbunden ist, und Isolatoren aufweist.

Die FR 2 413 729 A1 offenbart ein Verfahren und ein System für eine Detektion von Änderungen an einer Anordnung mit einem Draht.

Die WO 2013/117905 A1 offenbart ein Verfahren zum Detektieren einer Störung in oder in der Umgebung eines metallischen Leiters sowie eine Störungserkennungsvorrichtung für einen metallischen Leiter.

Es ist daher eine Aufgabe der vorliegenden Erfindung, eine einfache und kostengünstige Möglichkeit zur Detektion einer Manipulation an einer elektrischen Leitung zu schaffen. Demgemäß wird ein Verfahren zum Erkennen einer Manipulation zumindest einer elektrischen Kommunikationsleitung (im Folgenden auch einfach als Leitung bezeichnet) vorgeschlagen. Die elektrische Leitung hat einen bestimmten Widerstand, eine bestimmte Kapazität und eine bestimmte Induktivität und koppelt zumindest zwei Kommunikationsteilnehmer. In einem ersten Schritt wird ein definierter Parameter ermittelt, welcher von dem bestimmten Widerstand und der bestimmten Kapazität oder von dem bestimmten Widerstand und der bestimmten Induktivität oder von dem bestimmten Widerstand und der bestimmten Kapazität und der bestimmten Induktivität der elektrischen Leitung abhängig ist. In einem zweiten Schritt wird der ermittelte Parameter mit einem Referenzparameter zum Bereitstellen eines Vergleichsergebnisses verglichen. In einem dritten Schritt wird eine Manipulation der elektrischen Leitung in Abhängigkeit von dem bereitgestellten Vergleichsergebnis erkannt.

Aus dem Vergleichsergebnis kann abgeleitet werden, ob die elektrische Leitung manipuliert wurde oder nicht. Beispiele für eine solche Manipulation sind das Anbringen eines Kabels an der elektrischen Leitung oder das Anbringen eines Messgerätes an der elektrischen Leitung.

Die elektrische Leitung kann beispielsweise ein Bus oder ein Bussystem sein, welches mehrere Kommunikationsteilnehmer koppelt oder verbindet. Die elektrische Leitung kann auch ein bidirektionaler Bus sein. Die Kommunikationsteilnehmer können einen Bus-Master und verschiedene Bus-Slaves, wie Aktoren und Sensoren, umfassen.

Die Referenzparameter können in einem Speicher abgelegt werden oder in einem durchzuführenden Personalisierungsschritt generiert werden.

Durch das oben beschriebene Verfahren wird es ermöglicht, Veränderungen an der elektrischen Leitung und auch an den mit der elektrischen Leitung gekoppelten Komponenten oder Kommunikationsteilnehmern automatisch zu erkennen. Damit kann für die zu schützende elektrische Leitung und die damit gekoppelten Komponenten oder Kommunikationsteilnehmer automatisch erkannt werden, ob die elektrische Leitung abgehört wird oder zusätzliche elektronische Komponenten eingebracht wurden, z.B. durch den Einbau von oben genannten Mod-Chips. Bei der Detektion einer solchen Manipulation kann gegebenenfalls aktiv auf solche Eingriffe reagiert werden. Als Reaktion auf einen erkannten Angriff auf die elektrische Leitung können beispielsweise gespeicherte Schlüsselmaterialien oder zu schützende Daten sofort gelöscht werden. Alternativ kann die Arbeitsweise der elektrischen Leitung oder des Geräts geändert werden. Ferner kann die elektrische Leitung oder das Gerät auch abgeschaltet werden.

Damit ist eine einfache und kostengünstige Möglichkeit geschaffen, die elektrische Leitung, z.B. eine externe Leitung eines Mikrokontrollers, zu überwachen. Dabei können herkömmliche Platinen und Bestückungstechniken eingesetzt werden, da die zu schützende elektrische Leitung nicht verpackt werden muss. Vorzugsweise werden während des Betriebes der elektrischen Leitungen wiederholt die elektrischen Eigenschaften, nämlich insbesondere die Kapazität und/oder die Induktivität und der Widerstand der elektrischen Leitung, gemessen. Auf diese Weise können Manipulationsversuche eines Angreifers oder Änderungen des Schaltungsaufbaus erkannt werden. Insbesondere bidirektionale Busse, wie beispielsweise Datenbusse von externen Komponenten wie Speicher oder Peripherieeinheiten, können somit geschützt werden.

Wie oben bereits angedeutet, kann die elektrische Leitung ein Kommunikationsbus oder Bus sein, welcher einen Bus-Master mit einer Anzahl von Bus-Slaves koppelt. Bei bidirektional verwendeten Bussen besitzen alle angeschlossenen Kommunikationsteilnehmer oder Komponenten ein sogenanntes Enable-Signal, welches den Bus-Master ermöglicht, gezielt die einzelnen Kommunikationsteilnehmer zu adressieren, um mit ihnen zu kommunizieren. Die an der Kommunikation nicht beteiligten Kommunikationsteilnehmer erhalten dann ein Disable-Signal und schalten ihre Ausgangstreiber für den Bus hochohmig, um auf dem Bus keinen Kurzschluss zu verursachen. Um dies zu erreichen, sind die Treiber der Ausgangssignale beispielsweise Tri-State-fähig. Das heißt, dass sie neben den Ausgangszuständen logisch 0 und logisch 1 auch als dritten Zustand hochohmig geschaltet werden können. Werden nun alle angeschlossenen Kommunikationsteilnehmer des Busses gleichzeitig in den hochohmigen Zustand gesetzt, so verhält sich jede einzelne Leitung des Busses wie eine Kette aus parallel geschalteten RC-Gliedern bestehend aus dem geringen Widerstandsbelag und Kapazitätsbelag der Anschlusspads der integrierten Schaltungen (ICs, Integrated Circuits), dem Kontakt und der Leitung auf der Platine und jeweils hochohmigen Abschlusswiderständen der angeschlossenen Komponenten.

Vorliegend werden die elektrischen Eigenschaften der zu überwachenden Busleitungen, insbesondere der Widerstand und die Kapazität, im hochohmigen Zustand gemessen, um dadurch Manipulationsversuche, welche auch stets das elektrische Antwortverhalten der Leitungen ändern, detektieren zu können. Dadurch wird eine kostengünstige Lösung erzielt, die sich universell in Field-Programmable-Gate-Arrays (FPGA) und Application-Specific-Integrated Circuits (ASICs) einsetzen lässt.

Bei dem vorgeschlagenen Verfahren wird als der Parameter eine Zeitdauer ermittelt, welche von dem bestimmten Widerstand und der bestimmten Kapazität der elektrischen Leitung abhängig ist.

Bei diesem vorgeschlagenen Verfahren wird das Zeitverhalten der zumindest einen elektrischen Leitung, insbesondere von Busleitungen, gemessen. Dabei wird insbesondere das Produkt aus dem bestimmten Widerstand R und der bestimmten Kapazität C (τ = R·C) aus hochohmigen Abschlusswiderständen und dem Kapazitätsbelag der elektrischen Komponenten der elektrischen Leitung bestimmt. Um eine solche Messung beispielsweise durchführen zu können, treibt der Bus-Master ein logisches 1-Signal auf die elektrische Leitung, beispielsweise den bidirektionalen Bus, während alle angeschlossenen Kommunikationsteilnehmer ein Disable-Signal haben und damit hochohmig sind. Auf diese Weise wird der durch die Leiterbahn der Platine gebildete Kondensator der Busleitung elektrisch aufgeladen. Anschließend schaltet der Bus-Master seine Ausgangstreiber ebenfalls hochohmig und verwendet das Signal auf der Leitung des Busses als Eingangssignal. Die RC-Glieder der Busleitung entladen sich nun über die hochohmigen Abschlusswiderstände der angeschlossenen Komponenten und durch Leckströme bis das durch die Spannung am Eingang des Bus-Masters repräsentierte Signal von logisch 1 auf logisch 0 wechselt. Diese Zeitdauer bis zum Signalwechsel ist charakteristisch für die elektrischen Eigenschaften jeder einzelnen elektrischen Leitung und hängt von ihrer Geometrie und
allen angeschlossenen Komponenten ab. Zeitmessungen können dank hoher, stabiler Systemtakte auf einfache weise durchgeführt werden. Jede Änderung der Schaltung und jeder Versuch, das Signal der Busleitung abzugreifen, wird insbesondere die ohmschen und kapazitiven Eigenschaften der Busleitung und damit die Zeitdauer bis zu einem Wechsel der logischen Signale signifikant verändern. Folglich sind Manipulationen eindeutig feststellbar.

Falls die CPU des Bus-Masters ausreichend hoch getaktet ist, kann sie mit einer einfachen Schleife die Taktsignale vom Zeitpunkt des hochohmig Schaltens einer Busleitung bis zum logischen Wechsel des Wertes zählen und auf diese Weise die Entladezeit messen. Alternativ kann auch mit wenigen elektronischen Komponenten ein schnell laufender Zähler für die Zeitmessung realisiert werden.

Die CPU misst nun wiederkehrend für alle zu überwachenden elektrischen Leitungen ihrer bidirektionalen Busse auf oben beschriebene Weise das Zeitverhalten und prüft auf signifikante Abweichungen von einem erwarteten Verhalten. Die Abweichung wird durch das Vergleichsergebnis bestimmt. Wird eine signifikante Abweichung festgestellt, so ist ein Angriff detektiert und die CPU des Bus-Masters kann geeignete Gegenmaßnahmen ergreifen.

In Abhängigkeit vom konkreten Einsatzszenario ist gegebenenfalls nur eine geringe externe Zusatzbeschaltung, beispielsweise durch einen Pull-Down-Widerstand oder einen Pull-Up-Widerstand notwendig. Die für die Zeitmessung im Bus-Master notwendigen Komponenten beschränken sich insbesondere auf einen Tri-State-Buffer, welcher üblicherweise zur Steuerung eines bidirektionalen Busses inherent vorhanden ist, und gegebenenfalls auf einen schnell laufenden Zähler für die Zeitmessung. Insbesondere sind alle notwendigen elektronischen Komponenten synthetisierbar und mittels Standardzellbibliotheken realisierbar.

Ferner können unidirektionale Signalleitungen als elektrische Leitungen um einen zusätzlichen Tri-State-Treiber und die notwendigen Eingabe-Ausgabe-Komponenten (IO-Komponenten) ergänzt werden. Auf diese Weise kann das vorliegende Verfahren auf weitere Anschlussleitungen eines Mikrokontrollers oder einer integrierten Schaltung angewendet werden.

Bei einer weiteren Ausführungsform hat das Verfahren die folgenden Schritte:
- Messen der aktuellen Umgebungstemperatur der elektrischen Leitung,
- Ändern des ermittelten Parameters und/oder des Referenzparameters mittels einer Temperatur-Kompensation in Abhängigkeit von der gemessenen aktuellen Umgebungstemperatur,
- Vergleichen des Parameters mit dem Referenzparameter zur Bereitstellung des Vergleichsergebnisses, und
- Erkennen einer Manipulation der elektrischen Leitung in Abhängigkeit von dem bereitgestellten Vergleichsergebnis.

Weil Halbleiter und die zu messenden Widerstände einen charakteristischen Temperaturverlauf besitzen können, wird vorzugsweise die jeweils aktuelle Temperatur gemessen und eine geeignete Temperaturkompensation realisiert, um die Anzahl und die Wahrscheinlichkeit von Fehlalarmen zu verringern. Eine solche Temperaturkompensation kann in Hardware und/oder Software, insbesondere in der Überwachungsroutine der CPU des Bus-Masters, implementiert werden.

Bei einer weiteren Ausführungsform wird der aktuell ermittelte definierte Parameter der elektrischen Leitung für eine Temperatur-Kompensation zumindest einer weiteren elektrischen Leitung verwendet.

Bei einer weiteren Ausführungsform hat das Verfahren die folgenden Schritte:
- Ermitteln zumindest einer Zustandsinformation der elektrischen Leitung,
- Ändern des ermittelten Parameters und/oder des Referenzparameters mittels einer Zustands-Kompensation in Abhängigkeit von der ermittelten zumindest einen Zustandsinformation,
- Vergleichen des Parameters mit dem Referenzparameter zur Bereitstellung des Vergleichsergebnisses, und
- Erkennen einer Manipulation der elektrischen Leitung in Abhängigkeit von dem bereitgestellten Vergleichsergebnis.

Die Zustandsinformation kann Betriebsparameter, Alter und Drift umfassen.

Durch oben genannte Zustandskompensation wird insbesondere die Alterung der elektronischen Komponenten berücksichtigt. Auch ein langsamer Drift, welcher beispielsweise durch eine Änderung der Betriebsparameter oder durch Alterung der elektronischen Komponenten entstehen kann, wird ebenfalls kompensiert, um Fehlalarme zuverlässig verhindern zu können. Dazu werden vorzugsweise Zustandsinformationen über das zu messende System in einen nicht flüchtigen Speicher gespeichert und in regelmäßigen Zeitabständen aktualisiert.

Bei einer weiteren Ausführungsform wird die ermittelte zumindest eine Zustandsinformation der elektrischen Leitung für die Zustands-Kompensation zumindest einer weiteren elektrischen Leitung verwendet.

Somit wird auch eine differenzielle Analyse ermöglicht. Damit kann der Umstand der sich ändernden Umweltbedingungen und Betriebsparameter auch durch die oben beschriebene differenzielle Analyse gelöst werden. Dabei wird davon ausgegangen, dass sich einerseits Änderungen der Betriebsparameter und die Alterung der elektronischen Komponenten aufgrund der eng begrenzten Lokalität der elektrischen Leitungen und der angeschlossenen Komponenten innerhalb eines Geräts gleichzeitig und gleichmäßig auswirken, dass aber andererseits ein Angreifer regelmäßig nicht in der Lage ist, alle Messpunkte hinreichend gleichzeitig und gleichmäßig zu manipulieren, um der Detektion einer Manipulation entgegen zu können.

Bei einer weiteren Ausführungsform hat das Verfahren die folgenden Schritte:
- Aufladen der Kapazität der elektrischen Leitung,
- hochohmig Schalten aller mit der elektrischen Leitung gekoppelten Komponenten,
- Messen einer definierten Entladezeit während eines Entladens der Kapazität der elektrischen Leitung,
- Vergleichen der gemessenen Entladezeit mit einer Referenz-Entladezeit zur Bereitstellung eines Vergleichsergebnisses, und
- Erkennen einer Manipulation der elektrischen Leitung in Abhängigkeit von dem bereitgestellten Vergleichsergebnis.

Bei einer weiteren Ausführungsform wird die Kapazität der elektrischen Leitung mittels eines Pull-Down-Widerstands entladen.

Der Pull-Down-Widerstand kann insbesondere auch eingesetzt werden, wenn beispielsweise eine der angeschlossenen Komponenten auch im hochohmigen Zustand das Entladen der elektrischen Leitung verhindert oder um das Zeitverhalten einstellen zu können. Der tatsächliche Wert des Pull-Down-Widerstandes und seine Fertigungstoleranz bieten zusätzliche Möglichkeiten zur Variation des Zeitverhaltens beim Entladen der Busleitung.

Bei einer weiteren Ausführungsform hat das Verfahren die folgenden Schritte:
- Entladen der Kapazität der elektrischen Leitung,
- hochohmig Schalten aller mit der elektrischen Leitung gekoppelten Komponenten,
- Laden der Kapazität der elektrischen Leitung mittels eines Pull-Up-Widerstands,
- Messen einer definierten Ladezeit während des Ladens der Kapazität der elektrischen Leitung,
- Vergleichen der gemessenen Ladezeit mit einer Referenz-Ladezeit zur Bereitstellung eines Vergleichsergebnisses, und
- Erkennen einer Manipulation der elektrischen Leitung in Abhängigkeit von dem bereitgestellten Vergleichsergebnis.

In dieser Ausführungsform kann der Bus-Master zu Beginn der Messung den Wert logisch 0 auf der elektrischen Leitung, beispielsweise einem bidirektionalen Bus, treiben, um die elektrische Leitung zu entladen. Nachdem der Bus-Master seine Treiber hochohmig geschaltet hat, wird die Busleitung über den Pull-Up-Widerstand aufgeladen, bis die anliegende Spannung einen Wechsel auf logisch 1 signalisiert. In diesem Fall wird die Zeitdauer von einem Wechsel von logisch 0 auf logisch 1 gemessen. Diese gemessene Zeitdauer wird dann mit der Referenz-Ladezeit verglichen, um das Vergleichsergebnis bereitzustellen.

Bei einer weiteren Ausführungsform wird das hochohmig Schalten aller mit der elektrischen Leitung gekoppelten Komponenten mittels mindestens eines Tri-State-Treibers durchgeführt.

Bei einer weiteren Ausführungsform wird als der Parameter eine Frequenz eines Oszillators ermittelt, welche von dem bestimmten Widerstand und der bestimmten Kapazität und/oder der bestimmten Induktivität der elektrischen Leitung abhängig ist.

Bei einer weiteren Ausführungsform ist die elektrische Leitung als ein Kommunikations-Bus ausgebildet.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ferner wird eine Vorrichtung zum Erkennen einer Manipulation zumindest einer elektrischen Leitung vorgeschlagen. Die elektrische Leitung hat einen bestimmten Widerstand, eine bestimmte Kapazität und eine bestimmte Induktivität und koppelt zumindest zwei Kommunikationsteilnehmer. Die Vorrichtung weist ein Ermittelungsmittel, ein Vergleichsmittel und ein Erkennungsmittel auf. Das Ermittelungsmittel ist zum Ermitteln eines Parameters eingerichtet, welcher von dem bestimmten Widerstand und der bestimmten Kapazität oder von dem bestimmten Widerstand und der bestimmten Induktivität oder von dem bestimmten Widerstand und der bestimmten Kapazität und der bestimmten Induktivität der elektrischen Leitung abhängig ist. Als der Parameter wird hierbei eine Zeitdauer ermittelt, welche von dem bestimmten Widerstand und der bestimmten Kapazität der elektrischen Leitung abhängig ist. Das Vergleichsmittel ist zum Vergleichen des ermittelten Parameters mit einem Referenzparameter zum Bereitstellen eines Vergleichsergebnisses eingerichtet. Das Erkennungsmittel ist zum Erkennen einer Manipulation der elektrischen Leitung in Abhängigkeit von dem bereitgestellten Vergleichsergebnis eingerichtet.

Das jeweilige Mittel, Ermittelungsmittel, Vergleichsmittel und Erkennungsmittel, kann hardwaretechnisch und/oder auch softwaretechnisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Des Weiteren wird eine Anordnung vorgeschlagen, welche eine elektrische Leitung, welche einen bestimmten Widerstand und eine bestimmte Kapazität und eine bestimmte Induktivität aufweist, zumindest zwei Kommunikationsteilnehmer, welche über die elektrische Leitung gekoppelt sind, und eine wie oben beschriebene Vorrichtung zum Erkennen einer Manipulation an der elektrischen Leitung umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Ablaufdiagramm eines ersten Ausführungsbeispiels eines Verfahrens zum Erkennen einer Manipulation an einer elektrischen Leitung;
- Fig. 2: ein Blockschaltbild eines ersten Ausführungsbeispiels einer elektrischen Leitung mit zwei gekoppelten Komponenten;
- Fig. 3: ein Ablaufdiagramm eines zweiten Ausführungsbeispiels eines Verfahrens zum Erkennen einer Manipulation an einer elektrischen Leitung;
- Fig. 4: ein Blockschaltbild eines zweiten Ausführungsbeispiels einer elektrischen Leitung mit zwei gekoppelten Komponenten;
- Fig. 5: ein Ablaufdiagramm eines dritten Ausführungsbeispiels eines Verfahrens zum Erkennen einer Manipulation an einer elektrischen Leitung;
- Fig. 6: ein Blockschaltbild eines dritten Ausführungsbeispiels einer elektrischen Leitung mit zwei gekoppelten Komponenten;
- Fig. 7: ein Blockschaltbild eines Ausführungsbeispiels einer Vorrichtung zum Erkennen einer Manipulation an einer elektrischen Leitung;
- Fig. 8: ein Blockschaltbild eines Ausführungsbeispiels einer Komponente;
- Fig. 9: eine Verteilung der Häufigkeiten von gemessenen Zählerstände bei einem ersten Experiment;
- Fig. 10: eine Verteilung der Häufigkeiten von gemessenen Zählerstände bei einem zweiten Experiment;
- Fig. 11: eine Verteilung der Häufigkeiten von gemessenen Zählerstände bei einem dritten Experiment;
- Fig. 12: eine Verteilung der Häufigkeiten von gemessenen Zählerstände bei einem vierten Experiment; und
- Fig. 13: ein Diagramm mit den Kurven der Figuren 9 bis 12.

In den Figuren sind gleiche oder funktionsgleiche Elemente mit denselben Bezugszeichen versehen worden, sofern nichts anderes angegeben ist.

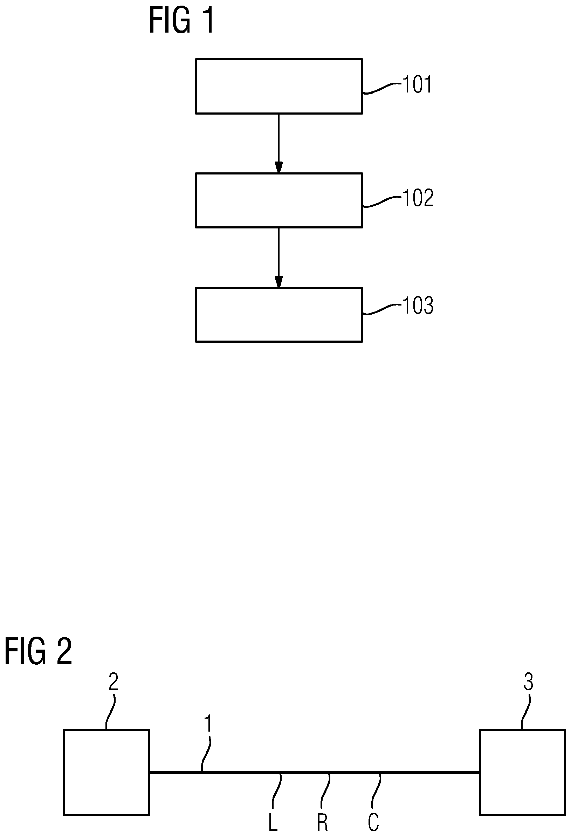

In Fig. 1 ist ein Ablaufdiagramm eines ersten Ausführungsbeispiels eines Verfahrens zum Erkennen einer Manipulation an einer elektrischen Kommunikationsleitung 1 (im Folgenden auch einfach als Leitung 1 bezeichnet) dargestellt. Dazu zeigt Fig. 2 ein Blockschaltbild der elektrischen Leitung 1 mit zwei gekoppelten Komponenten 2, 3. In den Figuren sind die Begriffe Komponente und Kommunikationsteilnehmer synonym verwendet. Die elektrische Leitung 1 ist zum Beispiel eine elektrische Leitung. Die elektrische Leitung 1 hat einen bestimmten Widerstand R, eine bestimmte Induktivität L und eine bestimmte Kapazität C.

In Schritt 101 wird ein definierter Parameter ermittelt, welcher von dem bestimmten Widerstand R und der bestimmten Kapazität C und/oder der bestimmten Induktivität L der elektrischen Leitung 1 abhängig ist. In Schritt 102 wird der ermittelte Parameter mit einem Referenzparameter zum Bereitstellen eines Vergleichsergebnisses verglichen. In Schritt 103 wird eine Manipulation der elektrischen Leitung 1 in Abhängigkeit des bereitgestellten Vergleichsergebnisses erkannt.

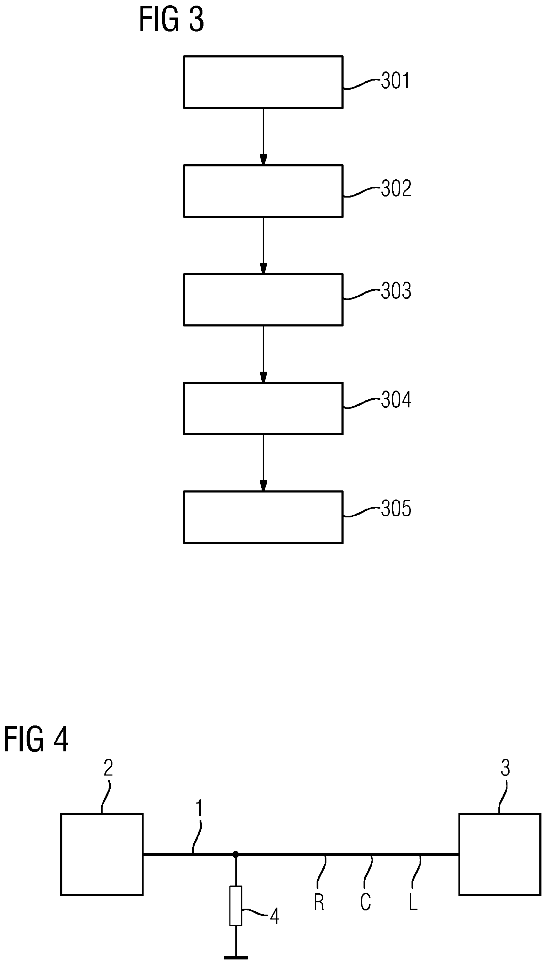

In Fig. 3 ist ein Ablaufdiagramm eines zweiten Ausführungsbeispiels eines Verfahrens zum Erkennen einer Manipulation an einer elektrischen Leitung 1 dargestellt. Dazu zeigt die Fig. 4 eine elektrische Leitung 1, mittels welcher zwei Kommunikationsteilnehmer 2, 3 gekoppelt sind. Die elektrische Leitung 1 hat einen Widerstand R und eine Kapazität C. Ferner ist die elektrische Leitung 1 der Fig. 4 mit einem Pull-Down-Widerstand 4 gekoppelt.

In Schritt 301 wird die Kapazität C der elektrischen Leitung 1 aufgeladen. In Schritt 302 werden alle mit der elektrischen Leitung 1 gekoppelten Kommunikationsteilnehmer 2, 3 hochohmig geschaltet. In dem Ausführungsbeispiel der Fig. 4 sind das die Kommunikationsteilnehmer 2 und 3.

In Schritt 303 wird eine definierte Entladezeit während eines Entladens der Kapazität der elektrischen Leitung gemessen. Die definierte Entladezeit τ kann dabei dem Produkt aus dem Widerstand R und der Kapazität C entsprechen (τ=R·C). Insbesondere wird die Kapazität C der elektrischen Leitung 1 dabei mittels des Pull-Down-Widerstandes 4 entladen.

In Schritt 304 wird die gemessene Entladezeit mit einer Referenz-Entladezeit verglichen und als Ergebnis des Vergleichs wird ein Vergleichsergebnis bereitgestellt. In Schritt 305 wird eine Manipulation an der elektrischen Leitung 1 in Abhängigkeit von dem bereitgestellten Vergleichsergebnis erkannt. Das heißt, aus dem Vergleichsergebnis ist ableitbar, ob die elektrische Leitung manipuliert wurde. Ein Beispiel für eine solche Manipulation ist das Anbringen einer zusätzlichen Leitung.

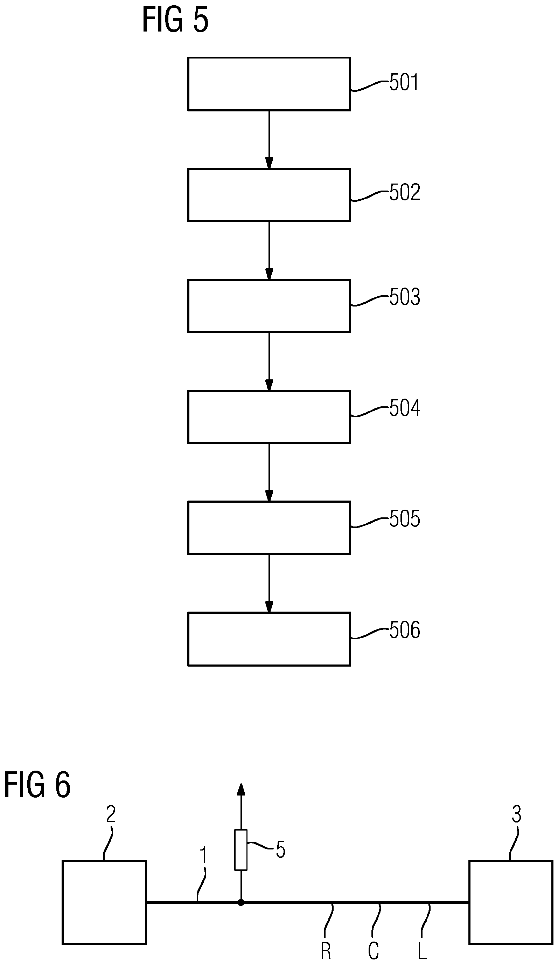

Fig. 5 illustriert ein Ablaufdiagramm eines dritten Ausführungsbeispiels eines Verfahrens zum Erkennen einer Manipulation an einer elektrischen Leitung 1. Dazu zeigt die Fig. 6 eine Kommunikationseinleitung 2 mit zwei gekoppelten Kommunikationsteilnehmern 2, 3 und einem Pull-Up-Widerstand 5.

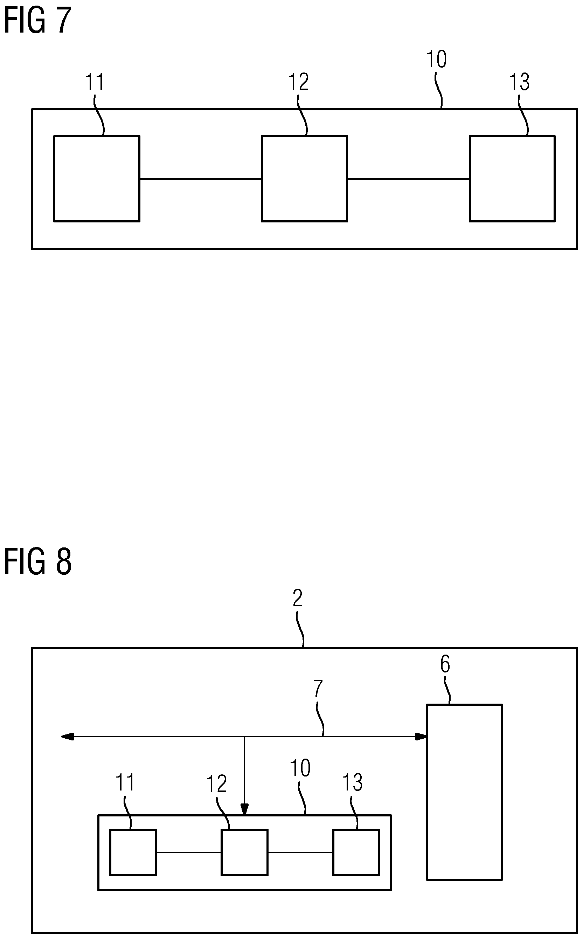

In Schritt 501 wird die Kapazität C der elektrischen Leitung 1 entladen. In Schritt 502 werden die mit der elektrischen Leitung 1 gekoppelten Kommunikationsteilnehmer 2, 3 hochohmig geschaltet. Das Hochohmigschalten der mit der elektrischen Leitung 1 gekoppelten Kommunikationsteilnehmer 2, 3 wird insbesondere mittels eines Tri-State-Treibers 6 (vgl. Fig. 8) durchgeführt.

In Schritt 503 wird die Kapazität C der elektrischen Leitung 1 mittels des Pull-Up-Widerstandes 5 geladen. In Schritt 504 wird eine definierte Ladezeit während des Landens der Kapazität C der elektrischen Leitung gemessen. In Schritt 505 wird die gemessene Ladezeit mit einer Referenz-Ladezeit zur Bereitstellung eines Vergleichsergebnisses verglichen. In Schritt 506 wird eine Manipulation der elektrischen Leitung 1 in Abhängigkeit von dem bereitgestellten Vergleichsergebnis erkannt oder detektiert.

Fig. 7 zeigt eine Vorrichtung 10 zum Erkennen einer Manipulation einer elektrischen Leitung 1, mittels welcher zumindest zwei Kommunikationsteilnehmer 2, 3, gekoppelt sind und welche einen bestimmten Widerstand R und eine bestimmte Kapazität C aufweist.

Die Vorrichtung 10 hat ein Ermittlungsmittel 11, ein Vergleichsmittel 12 und ein Erkennungsmittel 13. Das Ermittlungsmittel 11 ist zum Ermitteln eines Parameters eingerichtet, welcher von dem bestimmten Widerstand R und der bestimmten Kapazität C und/oder der bestimmten Induktivität L der elektrischen Leitung 1 abhängig ist. Das Vergleichsmittel 12 ist dazu eingerichtet, den ermittelten Parameter mit einem Referenzparameter zum Bereitstellen eines Vergleichsergebnisses zu vergleichen. Das Erkennungsmittel 13 ist dazu eingerichtet, eine Manipulation der elektrischen Leitung 1 in Abhängigkeit von dem bereitgestellten Vergleichsergebnis zu erkennen.

Ferner zeigt Fig. 8 ein Blockschaltbild eines Ausführungsbeispiels einer Komponente 2, die beispielsweise in Fig. 2 dargestellt ist. Die Komponente 2 ist vorzugsweise ein Bus-Master und weist die Vorrichtung 10 der Fig. 7 und einen Tri-State-Treiber 6 auf. Die Vorrichtung 10 und der Tri-State-Treiber 6 sind über einen Datenbus 7 gekoppelt.

Nachfolgend sind die Ergebnisse einiger praktischer Experimente aufgeführt. Der verwendete Messaufbau besteht aus einem Spartan 3 FPGA Board der Firma Xilinx, bei welchem ein Anschluss-Pad des FPGAs über einen 1 MOhm Widerstand gegen Masse verbunden ist. Das Pad wurde periodisch auf den 1-Wert gesetzt - dadurch wurde das durch das Pad und die externe Beschaltung resultierende RC-Glied auf die Betriebsspannung des FPGAs von 3.3 V aufgeladen - und anschließend hochohmig geschaltet. Ein mit dem Systemtakt von 66 MHz betriebener Zähler der Breite 32 Bit wird dabei zur Messung der Zeitdauer, bis das Anschluss-Pad wieder den 0-Wert anzeigt, verwendet.

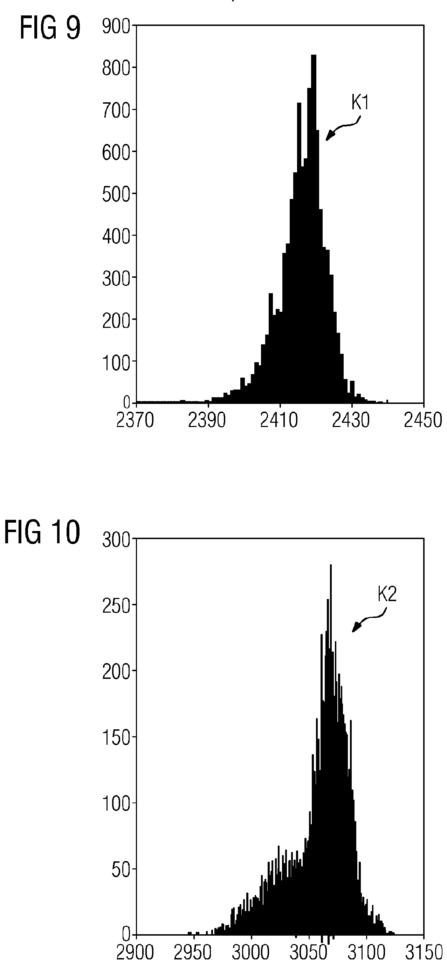

Mit diesem Messaufbau sind vier Experimente durchgeführt worden, deren Ergebnisse aus den Figuren 9 bis 13 ersichtlich sind. In jedem Experiment wurden 10000 Mess-Samples aufgezeichnet. Die Figuren 9 bis 12 zeigen die Verteilung der Häufigkeiten der gemessenen Zählerstände bei vier verschiedenen Experimenten.

Dabei zeigt Fig. 9 ein erstes Experiment, bei dem der oben beschriebene Aufbau ohne weitere Beschaltung verwendet worden ist.

Fig. 10 zeigt ein zweites Experiment, bei dem an das Anschluss-Pad des FPGAs ein weiteres Kabel mit einer Länge von etwa 70 cm einseitig angeschlossen worden ist. Die Effekte, die aus der im Vergleich zu Experiment 1 zusätzlichen kapazitiven Last des Kabels resultieren, sind deutlich durch einen Verglich der Kurve K2 der Fig. 10 mit der Kurve K1 der Fig. 9 zu erkennen.

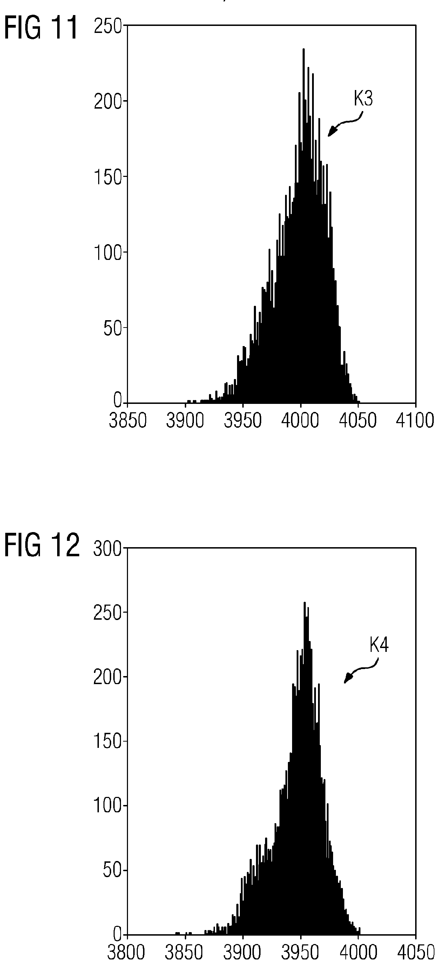

Fig. 11 illustriert ein drittes Experiment, bei dem ein digitales Volt-Meter zwischen dem Anschluss-Pad und Masse des FPGA-Boards geschaltet worden ist. Dabei war das Volt-Meter ausgeschaltet.

Fig. 12 zeigt ein viertes Experiment, bei dem das digitale Volt-Meter zwischen dem Anschluss-Pad und Masse des FPGA-Boards geschaltet worden ist. Dabei war das Volt-Meter eingeschaltet.

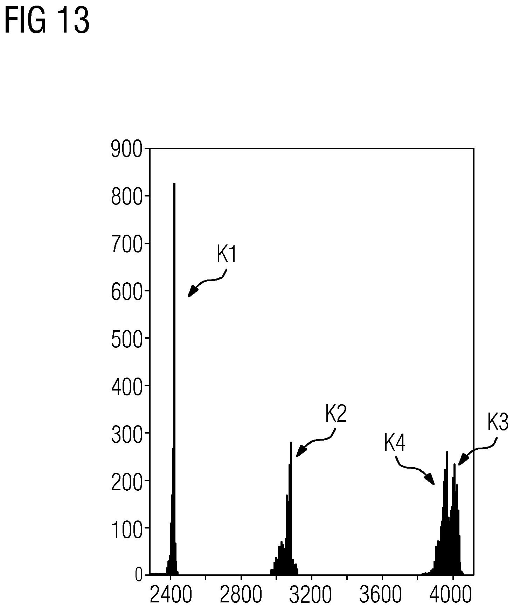

Die Fig. 13 enthält die die Kurven K1 bis K4 aller vier Experimente, um einen besseren Vergleich zu ermöglichen. Es ist deutlich zu erkennen, wie sich der Mittelwert der gemessenen Verteilungen von Experiment zu Experiment verändert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Erkennen einer Manipulation zumindest einer elektrischen Kommunikationsleitung (1), mittels welcher zumindest zwei Kommunikationsteilnehmer (2 ,3) gekoppelt sind und welche einen bestimmten Widerstand (R), eine bestimmte Kapazität (C) und eine bestimmte Induktivität (L) aufweist, mit den Schritten: - Ermitteln (301) eines definierten Parameters, welcher von dem bestimmten Widerstand (R) und der bestimmten Kapazität (C) oder von dem bestimmten Widerstand R) und der bestimmten Induktivität (L) oder von dem bestimmten Widerstand (R) und der bestimmten Kapazität (C) und der bestimmten Induktivität (L) der elektrischen Kommunikationsleitung (1) abhängig ist, wobei als der Parameter eine Zeitdauer ermittelt wird, welche von dem bestimmten Widerstand (R) und der bestimmten Kapazität (C) der elektrischen Kommunikationsleitung (1) abhängig ist,- Vergleichen (302) des ermittelten Parameters mit einem Referenzparameter zum Bereitstellen eines Vergleichsergebnisses, und
- Erkennen (303) einer Manipulation der elektrischen Kommunikationsleitung (1) in Abhängigkeit von dem bereitgestellten Vergleichsergebnis.

2. Verfahren nach Anspruch 1,
**gekennzeichnet durch** die Schritte:
- Messen der aktuellen Umgebungstemperatur der elektrischen Kommunikationsleitung (1),
- Ändern des ermittelten Parameters und/oder des Referenzparameters mittels einer Temperatur-Kompensation in Abhängigkeit von der gemessenen aktuellen Umgebungstemperatur,
- Vergleichen des Parameters mit dem Referenzparameter zur Bereitstellung des Vergleichsergebnisses, und
- Erkennen einer Manipulation der elektrischen Kommunikationsleitung (1) in Abhängigkeit von dem bereitgestellten Vergleichsergebnis.

3. Verfahren nach Anspruch 2,
**dadurch gekennzeichnet,**
**dass** der aktuell ermittelte definierte Parameter der elektrischen Kommunikationsleitung (1) für eine Temperatur-Kompensation zumindest einer weiteren elektrischen Leitung verwendet wird.

4. Verfahren nach Anspruch 1, **gekennzeichnet durch** die Schritte:
- Ermitteln zumindest einer Zustandsinformation der elektrischen Kommunikationsleitung (1),
- Ändern des ermittelten Parameters und/oder des Referenzparameters mittels einer Zustands-Kompensation in Abhängigkeit von der ermittelten zumindest einen Zustandsinformation,
- Vergleichen des Parameters mit dem Referenzparameter zur Bereitstellung des Vergleichsergebnisses, und
- Erkennen einer Manipulation der elektrischen Kommunikationsleitung (1) in Abhängigkeit von dem bereitgestellten Vergleichsergebnis.

5. Verfahren nach Anspruch 4,
**dadurch gekennzeichnet,**
**dass** die ermittelte zumindest eine Zustandsinformation der elektrischen Kommunikationsleitung (1) für die Zustands-Kompensation zumindest einer weiteren elektrischen Leitung verwendet wird.

6. Verfahren nach einem der Ansprüche 1 bis 5, **gekennzeichnet durch** die Schritte:
- Aufladen (301) der Kapazität (C) der elektrischen Leitung Kommunikationsleitung (1),
- hochohmig Schalten (302) aller mit der elektrischen Kommunikationsleitung (1) gekoppelten Kommunikationsteilnehmer (2,3),
- Messen (303) einer definierten Entladezeit während eines Entladens der Kapazität (C) der elektrischen Kommunikationsleitung (1),
- Vergleichen (304) der gemessenen Entladezeit mit einer Referenz-Entladezeit zur Bereitstellung eines Vergleichsergebnisses, und
- Erkennen (305) einer Manipulation der elektrischen Kommunikationsleitung (1) in Abhängigkeit von dem bereitgestellten Vergleichsergebnis.

7. Verfahren nach Anspruch 6,
**dadurch gekennzeichnet,**
**dass** die Kapazität (C) der elektrischen Kommunikationsleitung (1) mittels eines Pull-Down-Widerstands (4) entladen wird.

8. Verfahren nach einem der Ansprüche 1 bis 5, **gekennzeichnet durch** die Schritte:
- Entladen (501) der Kapazität (C) der elektrischen Kommunikationsleitung (1),
- hochohmig Schalten (502) aller mit der elektrischen Kommunikationsleitung (1) gekoppelten Kommunikationsteilnehmer (2,3),
- Laden (503) der Kapazität (C) der elektrischen Kommunikationsleitung (1) eines Pull-Up-Widerstands (5),
- Messen (504) einer definierten Ladezeit während des Ladens der Kapazität (C) der elektrischen Kommunikationsleitung (1),
- Vergleichen (505) der gemessenen Ladezeit mit einer Referenz-Ladezeit zur Bereitstellung eines Vergleichsergebnisses, und
- Erkennen (506) einer Manipulation der elektrischen Kommunikationsleitung (1) in Abhängigkeit von dem bereitgestellten Vergleichsergebnis.

9. Verfahren nach einem der Ansprüche 6 bis 8,
**dadurch gekennzeichnet,**
**dass** das hochohmig Schalten aller mit der elektrischen Kommunikationsleitung (1) gekoppelten Kommunikationsteilnehmer (2,3) mittels mindestens eines Tri-State-Treibers (6) durchgeführt wird.

10. Verfahren nach einem der Ansprüche 1 bis 9,
**dadurch gekennzeichnet,**
**dass** die elektrische Kommunikationsleitung (1) als ein Kommunikations-Bus ausgebildet ist.

11. Computerprogrammprodukt, welches auf einer programmgesteuerten Einrichtung die Durchführung eines Verfahrens nach einem der Ansprüche 1 bis 10 veranlasst.

12. Vorrichtung (10) zum Erkennen einer Manipulation zumindest einer elektrischen Kommunikationsleitung, mittels welcher zumindest zwei Kommunikationsteilnehmer gekoppelt sind und welche einen bestimmten Widerstand und eine bestimmte Kapazität und eine bestimmte Induktivität aufweist, mit:
einem Ermittelungsmittel (11) zum Ermitteln eines Parameters, welcher von dem bestimmten Widerstand (R) und der bestimmten Kapazität (C) oder von dem bestimmten Widerstand R) und der bestimmten Induktivität (L) oder von dem bestimmten Widerstand (R) und der bestimmten Kapazität (C) und der bestimmten Induktivität (L) der elektrischen Kommunikationsleitung (1) abhängig ist,
wobei als der Parameter eine Zeitdauer ermittelt wird, welche von dem bestimmten Widerstand (R) und der bestimmten Kapazität (C) der elektrischen Kommunikationsleitung (1) abhängig ist,
einem Vergleichsmittel (12) zum Vergleichen des ermittelten Parameters mit einem Referenzparameter zum Bereitstellen eines Vergleichsergebnisses, und
einem Erkennungsmittel (13) zum Erkennen einer Manipulation der elektrischen Kommunikationsleitung (1) in Abhängigkeit von dem bereitgestellten Vergleichsergebnis.

13. Anordnung, mit:
einer elektrischen Kommunikationsleitung (1), welche einen bestimmten Widerstand (R), eine bestimmte Kapazität (C) und eine bestimmte Induktivität (L) aufweist,
zumindest zwei Kommunikationsteilnehmer (2,3), welche über die elektrischen Kommunikationsleitung (1) gekoppelt sind, und
einer Vorrichtung (10) zum Erkennen einer Manipulation an der elektrischen Kommunikationsleitung nach Anspruch 12.

## Claims

1. Method for recognizing a manipulation of at least one electrical communication line (1) by means of which at least two communication subscribers (2, 3) are coupled and which has a particular resistance (R), a particular capacitance (C) and a particular inductance (L), said method having the steps of:
- determining (301) a defined parameter which is dependent on the particular resistance (R) and the particular capacitance (C) or on the particular resistance (R) and the particular inductance (L) or on the particular resistance (R) and the particular capacitance (C) and the particular inductance (L) of the electrical communication line (1), wherein, as the parameter, a duration which is dependent on the particular resistance (R) and the particular capacitance (C) of the electrical communication line (1) is determined,
- comparing (302) the determined parameter with a reference parameter to provide a comparison result, and
- recognizing (303) a manipulation of the electrical communication line (1) on the basis of the provided comparison result.

2. Method according to Claim 1,
**characterized by** the steps of:
- measuring the present ambient temperature of the electrical communication line(1),
- changing the determined parameter and/or the reference parameter by means of temperature compensation on the basis of the measured present ambient temperature,
- comparing the parameter with the reference parameter to provide the comparison result, and
- recognizing a manipulation of the electrical communication line (1) on the basis of the provided comparison result.

3. Method according to Claim 2,
**characterized**
**in that** the currently determined defined parameter of the electrical communication line (1) is used for temperature compensation of at least one further electrical line.

4. Method according to Claim 1,
**characterized by** the steps of:
- determining at least one item of state information of the electrical communication line (1),
- changing the determined parameter and/or the reference parameter by means of a state compensation on the basis of the determined at least one item of state information,
- comparing the parameter with the reference parameter to provide the comparison result, and
- recognizing a manipulation of the electrical communication line (1) on the basis of the provided comparison result.

5. Method according to Claim 4,
**characterized**
**in that** the determined at least one item of state information of the electrical communication line (1) is used for the state compensation of at least one further electrical line.

6. Method according to any of Claims 1 to 5,
**characterized by** the steps of:
- charging (301) the capacitance (C) of the electrical communication line (1),
- switching (302) to high impedance all of the communication subscribers (2, 3) coupled to the electrical communication line (1),
- measuring (303) a defined discharging time during a discharging of the capacitance (C) of the electrical communication line (1),
- comparing (304) the measured discharging time with a reference discharging time to provide a comparison result, and
- recognizing (305) a manipulation of the electrical communication line (1) on the basis of the provided comparison result.

7. Method according to Claim 6,
**characterized**
**in that** the capacitance (C) of the electrical communication line (1) is discharged by means of a pull-down resistor (4).

8. Method according to any of Claims 1 to 5,
**characterized by** the steps of:
- discharging (501) the capacitance (C) of the electrical communication line (1),
- switching (502) to high impedance all of the communication subscribers (2, 3) coupled to the electrical communication line (1),
- charging (503) the capacitance (C) of the electrical communication line (1) by means of a pull-up resistor (5),
- measuring (504) a defined charging time during the charging of the capacitance (C) of the electrical communication line (1),
- comparing (505) the measured charging time with a reference charging time to provide a comparison result, and
- recognizing (506) a manipulation of the electrical communication line (1) on the basis of the provided comparison result.

9. Method according to any of Claims 6 to 8,
**characterized**
**in that** all of the communication subscribers (2, 3) coupled to the electrical communication line (1) are switched to high impedance by means of at least one tristate driver (6).

10. Method according to any of Claims 1 to 9,
**characterized**
**in that** the electrical communication line (1) is designed as a communication bus.

11. Computer program product, which causes a method according to any of Claims 1 to 10 to be performed on a program-controlled device.

12. Apparatus (10) for recognizing a manipulation of at least one electrical communication line by means of which at least two communication subscribers are coupled and which has a particular resistance and a particular capacitance and a particular inductance, said apparatus having:
a determination means (11) for determining a parameter which is dependent on the particular resistance (R) and the particular capacitance (C) or on the particular resistance (R) and the particular inductance (L) or on the particular resistance (R) and the particular capacitance (C) and the particular inductance (L) of the electrical communication line (1), wherein, as the parameter, a duration which is dependent on the particular resistance (R) and the particular capacitance (C) of the electrical communication line (1) is determined,
a comparison means (12) for comparing the determined parameter with a reference parameter to provide a comparison result, and a recognition means (13) for recognizing a manipulation of the electrical communication line (1) on the basis of the provided comparison result.

13. Arrangement having:
an electrical communication line (1) which has a particular resistance (R), a particular capacitance (C) and a particular inductance (L),
at least two communication subscribers (2, 3) which are coupled via the electrical communication line (1), and
an apparatus (10) according to Claim 12 for recognizing a manipulation on the electrical communication line.

## Revendications

1. Procédé de détection d'une manipulation d'au moins une ligne de communication électrique (1), au moyen de laquelle au moins deux partenaires de communication (2, 3) sont couplés et qui possède une résistance définie (R), une capacité définie (C) et une inductance définie (L), le procédé comprenant les étapes suivantes :
- détermination (301) d'un paramètre défini, qui est fonction soit de la résistance (R) et de la capacité (C) définies, soit de la résistance (R) et de l'inductance (L) définies, soit de la résistance (R), de la capacité (C) et de l'inductance (L) définies de la ligne de communication électrique (1), dans laquelle le paramètre déterminé est une durée qui est fonction de la résistance définie (R) et de la capacité définie (C) de la ligne de communication électrique (1),
- comparaison (302) du paramètre déterminé avec un paramètre de référence pour fournir un résultat de comparaison, et
- détection (303) d'une manipulation de la ligne de communication électrique (1) en fonction du résultat de comparaison fourni.

2. Procédé selon la revendication 1,
**caractérisé par** les étapes suivantes :
- mesure de la température environnante instantanée de la ligne de communication électrique (1),
- modification du paramètre déterminé et/ou du paramètre de référence au moyen d'une compensation de température en fonction de la température environnante mesurée instantanée,
- comparaison du paramètre avec le paramètre de référence pour fournir le résultat de comparaison, et
- détection (303) d'une manipulation de la ligne de communication électrique (1) en fonction du résultat de comparaison fourni.

3. Procédé selon la revendication 2,
**caractérisé en ce que** le paramètre défini déterminé instantanément de la ligne de communication électrique (1) est utilisé pour une compensation de température d'au moins une autre ligne électrique.

4. Procédé selon la revendication 1,
**caractérisé par** les étapes suivantes :
- détermination d'au moins une information d'état de la ligne de communication électrique (1),
- modification du paramètre déterminé et/ou du paramètre de référence au moyen d'une compensation d'état en fonction de la au moins une information d'état déterminée,
- comparaison du paramètre avec le paramètre de référence pour fournir un résultat de comparaison, et
- détection d'une manipulation de la ligne de communication électrique (1) en fonction du résultat de comparaison fourni.

5. Procédé selon la revendication 4,
**caractérisé en ce que** la au moins une information d'état déterminée de la ligne de communication électrique (1) est utilisée pour une compensation d'état d'au moins une autre ligne électrique.

6. Procédé selon l'une des revendications 1 à 5, **caractérisé par** les étapes suivantes :
- charge (301) de la capacité (C) de la ligne électrique de communication (1),
- commutation à valeur ohmique élevée (302) de tous les partenaires de communication (2, 3) couplés par la ligne de communication électrique,
- mesure (303) d'un temps de décharge défini pendant une décharge de la capacité (C) de la ligne de communication électrique (1),
- comparaison (304) du temps de décharge mesuré avec un temps de décharge de référence pour fournir un résultat de comparaison, et
- détection (305) d'une manipulation de la ligne de communication électrique (1) en fonction du résultat de comparaison fourni.

7. Procédé selon la revendication 6,
**caractérisé en ce que** la capacité (C) de la ligne de communication électrique (1) est déchargée au moyen d'une résistance de rappel (4).

8. Procédé selon l'une des revendications 1 à 5, **caractérisé par** les étapes suivantes :
- décharge (501) de la capacité (C) de la ligne électrique de communication (1),
- commutation à valeur ohmique élevée (502) de tous les partenaires de communication (2, 3) couplés par la ligne de communication électrique,
- charge (503) de la capacité (C) de la ligne de communication électrique (1) au moyen d'une résistance de tirage (5),
- mesure (504) d'un temps de charge défini pendant la charge de la capacité (C) de la ligne de communication électrique (1),
- comparaison (505) du temps de charge mesuré avec un temps de charge de référence pour fournir un résultat de comparaison, et
- détection (506) d'une manipulation de la ligne de communication électrique (1) en fonction du résultat de comparaison fourni.

9. Procédé selon l'une des revendications 6 à 8,
**caractérisé en ce que** la commutation à valeur ohmique élevée de tous les partenaires de communication (2, 3) couplés à la ligne de communication électrique (1) est effectuée au moyen d'au moins un circuit d'attaque à trois états (6).

10. Procédé selon l'une des revendications 1 à 9,
**caractérisé en ce que** la ligne de communication électrique (1) est configurée sous forme d'un bus de communication.

11. Produit de programme informatique, qui engendre sur un dispositif à commande programmée l'exécution d'un procédé selon l'une quelconque des revendications 1 à 10.

12. Dispositif (10) de détection d'une manipulation d'au moins une ligne de communication électrique, au moyen de laquelle au moins deux partenaires de communication sont couplés et qui possède une résistance définie, une capacité définie et une inductance définie, le dispositif comprenant :
un moyen de détermination (11) pour déterminer un paramètre qui est fonction soit de la résistance (R) et de la capacité (C) définies, soit de la résistance (R) et de l'inductance (L) définies, soit de la résistance (R), de la capacité (C) et de l'inductance (L) définies de la ligne de communication électrique (1), le paramètre déterminé étant une durée qui est fonction de la résistance définie (R) et de la capacité définie (C) de la ligne de communication électrique (1),
un moyen de comparaison (12) pour comparer le paramètre déterminé avec un paramètre de référence afin de fournir un résultat de comparaison, et
un moyen de détection (13) pour détecter une manipulation de la ligne de communication électrique (1) en fonction du résultat de comparaison fourni.

13. Agencement comprenant :
une ligne de communication électrique (1) qui possède une résistance (R) définie, une capacité (C) définie et une inductance (L) définie,
au moins deux partenaires de communication (2, 3) qui sont couplés par l'intermédiaire de la ligne de communication électrique (1), et
un dispositif (10) de détection d'une manipulation de la ligne de communication électrique (1) selon la revendication 12.
